# EUROPÄISCHE PATENTANMELDUNG

(11) **EP 1 610 110 A1**
(43) Veröffentlichungstag der Anmeldung: **28.12.2005**
(21) Anmeldenummer: 05013334.7
(22) Anmeldetag: 21.06.2005
(51) Int. Cl.: G01K 1/12, H01R 13/66

(54) **Elektrische Komponente, insbesondere Sensor, mit Steckkontakt**

(30) Priorität: 24.06.2004 DE 102004030696
(71) Anmelder: Behr GmbH & Co. KG, 70469 Stuttgart (DE)
(72) Erfinder: Rais, Thomas Jürgen, Dr.rer. nat., 71672 Marbach/Neckar (DE); Staiger, Wolfgang, 71672 Marbach/N (DE)
(74) Vertreter: Grauel, Andreas

(57) **Zusammenfassung**

Die Erfindung betrifft eine elektrische Komponente, insbesondere einen Sensor (1), mit Steckkontakt, welche einen zumindest bereichsweise in einem Gehäuse (5) verlaufenden Draht (3) aufweist, welcher zwischen einem, im Anwendungsfall gegebenenfalls einer extremen Temperatur ausgesetzten ersten Bereich (H) und mindestens einem zweiten Bereich (K) mit einem Steckkontakt, welcher beabstandet von dem ersten Bereich angeordnet ist, verläuft, wobei eine thermische Entkoppelung zwischen der elektrischen Komponente und dem Steckkontakt vorgesehen ist, die im Gehäuse (5) angeordnet ist.

## Beschreibung

Die Erfindung betrifft eine Anordnung einer elektrischen Komponente, insbesondere eines Sensors, gemäß dem Oberbegriff des Anspruchs 1.

Immer häufiger werden elektrische Komponenten, wie beispielsweise Sensoren, in Bereichen eingebaut, in denen hohe Umgebungstemperaturen herrschen, wie beispielsweise in einem Motorraum, wobei die Komponenten am Messort, zum Beispiel zur Überwachung der Kälte- oder Kühlmitteltemperatur, einer noch höheren Temperatur ausgesetzt. In Folge der hohen Temperatur am Messort kann es bei mittels Steckkontakten angebrachter Komponenten vorkommen, dass die metallischen Kontakte zu heiß werden und in den Kunststoff des Steckelements einschmelzen.

Kostengünstige Stecksysteme gibt es für Einsatztemperaturen bis ca. 125°C. Für höhere Temperaturbereiche gibt es speziell hierfür ausgelegte, teuere Stecksysteme. Diese teueren Stecksysteme sind auch dann zu verwenden, wenn die Grenztemperaturen für die kostengünstigen Stecksystseme nur kurzzeitig oder geringfügig überschritten werden.

Es ist Aufgabe der Erfindung, eine verbesserte und kostengünstige elektrische Komponente mit Steckkontakt zur Verfügung zu stellen.

Diese Aufgabe wird gelöst durch elektrische Komponente mit Steckkontakt mit den Merkmalen des Anspruchs 1. Vorteilhafte Ausgestaltungen sind Gegenstand der Unteransprüche.

Erfindungsgemäß ist eine elektrische Komponente, vorzugsweise einen Sensor, mit Steckkontakt, welche einen zumindest bereichsweise in einem Gehäuse verlaufenden Draht aufweist, welcher zwischen einem, im Anwendungsfall gegebenenfalls einer extremen Temperatur ausgesetzten ersten Bereich und mindestens einem zweiten Bereich mit einem Steckkontakt, welcher beabstandet von dem ersten Bereich angeordnet ist, verläuft, wobei eine thermische Entkoppelung zwischen der elektrischen Komponente und dem Steckkontakt vorgesehen ist, die im Gehäuse angeordnet ist. Hierbei soll unter Draht auch ein Kabel, Steg von beliebigem Querschnitt oder ähnliches verstanden werden, welches bzw. welcher eine elektrische Verbindung zwischen einer Messstelle und einem Steckkontakt bildet. In Folge der thermischen Entkoppelung erfolgt keine übermäßige Erwärmung des Bereichs des Drahtes in dem der Steckkontakt angeordnet ist, so dass ein kostengünstiges Stecksystem verwendet werden kann, so dass die Kosten gesenkt werden können. Hierbei sind die im Draht vorkommenden elektrischen Ströme sehr gering, so dass eine Erwärmung in Folge eines Stromflusses im Wesentlichen außer acht gelassen werden kann.

Teil der thermischen Entkoppelung ist bevorzugt ein Bereich mit verringerter Drahtdicke, welcher jedoch eine ausreichende Dicke für die elektrische Verbindung aufweist.

Bevorzugt ist Teil der thermischen Entkoppelung eine im Stecker verlaufende Schleife, wodurch die Drahtlänge und somit der Abstand zwischen heißem Bereich und kaltem Bereich verlängert werden kann. Dabei kann in diesem Entkopplungsbereich die Drahtdicke unverändert oder aber verringert sein. Ebenfalls kann die Verbindung zwischen Meßstelle und Steckkontakt auch durch Materialien gebildet sein, die eine gute elektrische jedoch eine geringe thermische Leitfähigkeit aufweisen.

Gemäß einer Variante ist Teil der thermischen Entkoppelung eine Metallfahne, welche sicherstellt, dass der Steckkontakt eine maximal zulässige Temperatur nicht überschreitet.

Der Draht ist in das Gehäuse, welches aus einem Kunststoff besteht, eingebettet, bevorzugt eingespritzt oder eingegossen, wodurch der Draht vor einer mechanischen Beschädigung geschützt ist.

Im Folgenden wird die Erfindung anhand von mehreren Ausführungsbeispielen, teilweise unter Bezugnahme auf die Zeichnung, im Einzelnen erläutert. In der Zeichnung zeigt:
- Fig. 1: einen Sensor gemäß dem ersten Ausführungsbeispiel,
- Fig. 2: einen Sensor gemäß dem zweiten Ausführungsbeispiel, und
- Fig. 3: einen Sensor gemäß dem dritten Ausführungsbeispiel.

Ein Sensor 1 weist ein in einem ersten Bereich H angeordnetes Messelement 2 auf, welches über einen Draht 3 mit einem in einem zweiten Bereich K angeordneten Steckerstift 4 verbunden ist. Über einen mit Hilfe des Stekkerstifts 4 gebildeten Kontakt mit dem zweiten Teil des Steckers kann das vom Messelement 2 abgegebene Signal einer Auswerteeinheit (nicht dargestellt) werden, welche beispielsweise in eine Steuerung integriert ist.

Der Draht 3 verläuft durch ein Gehäuse 5, an welchem ein Steckerbereich 6 auf der dem Messelement 2 gegenüberliegenden Seite ausgebildet ist, in welchem auch der Steckerstift 4 angeordnet ist. Dieser Aufbau ist für alle drei Ausführungsbeispiele gleich. Hierbei bildet der Sensor 1 mit Messelement 2, Draht 3, Steckerstift 4 und Gehäuse 5 eine elektrische Komponente mit Steckkontakt. Diese elektrische Komponente unterscheiden sich lediglich in der Ausgestaltung und Anordnung des Drahtes 3 in einem Bereich innerhalb des Gehäuses 5 (Entkopplungsbereich 7).

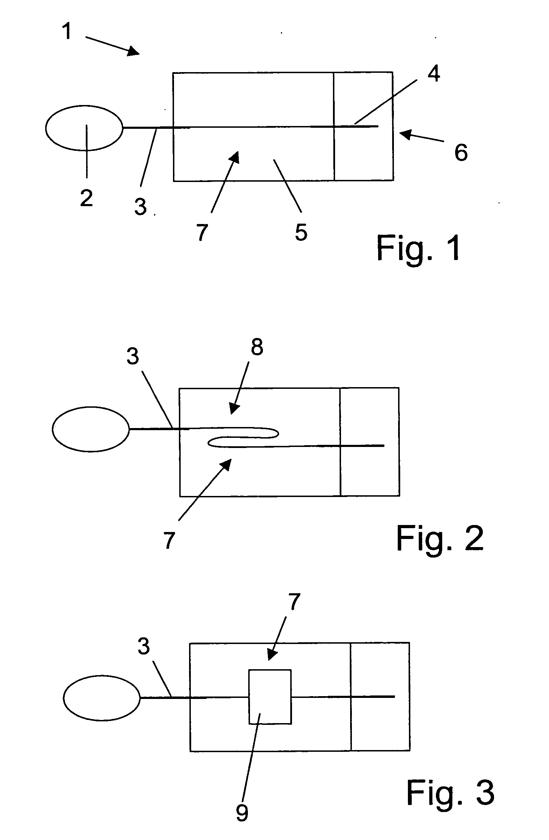

Gemäß dem in Fig. 1 dargestellten ersten Ausführungsbeispiel ist der Draht 3 im Entkoppelungsbereich 7 dünner ausgebildet als in den anderen Bereichen, wobei die Drahtdicke thermisch abgestimmt ist, um die von Seite der Messstelle her dem Draht 3 zugeführten Wärme an einer Durchleitung durch den Draht 3 zu hindern, wobei noch eine ausreichende elektrische Anbindung und gute Leitfähigkeitswerte gewährleistet sind. Dadurch wird sichergestellt, dass im Steckerbereich 6 die Temperatur des Drahtes 3 bzw. des Steckerstifts 4 einen vorgegebenen Wert, bis zu welchem das den Draht 3 bzw. den Steckerstift 4 umgebende Kunststoff-Material nicht schmilzt, nicht erreicht wird. Der Draht 3 ist hierbei in einem wesentlichen Bereich desselben in das Gehäuse 5 eingespritzt oder eingegossen, entsprechend dem verwendeten Herstellungsverfahren.

Entsprechend einer Variante ist das Gehäuse mehrteilig aufgebaut, so dass der Draht zwischen zwei Gehäuseteile eingeklemmt ist.

Gemäß dem in Fig. 2 dargestellten zweiten Ausführungsbeispiel ist der Draht 3 im Entkoppelungsbereich 7 dünner ausgebildet, wobei er in einer Schleife 8 verläuft, so dass der Abstand zwischen Wärmezuführung und Steckkontakt unter Beibehaltung der Baugröße deutlich vergrößert ausgebildet ist.

Gemäß dem in Fig. 3 dargestellten dritten Ausführungsbeispiel ist der Draht 3 im Entkoppelungsbereich 7 dünner ausgebildet, wobei er in seinem mittleren Bereich eine rechteckig ausgebildete dünne Metallfahne 9 aufweist, so dass der Wärmeübergangsbereich unter Beibehaltung der Baugröße deutlich vergrößert ausgebildet ist.

## Patentansprüche

1. Elektrische Komponente mit Steckkontakt, welche einen zumindest bereichsweise in einem Gehäuse (5) verlaufenden Draht (3) aufweist, welcher zwischen einem, im Anwendungsfall gegebenenfalls einer extremen Temperatur ausgesetzten ersten Bereich (H) und mindestens einem zweiten Bereich (K) mit einem Steckkontakt, welcher beabstandet von dem ersten Bereich angeordnet ist, verläuft, **dadurch gekennzeichnet, dass** eine thermische Entkoppelung zwischen der elektrischen Komponente und dem Steckkontakt vorgesehen ist, die im Gehäuse (5) angeordnet ist.

2. Elektrische Komponente mit Steckkontakt nach Anspruch 1, **dadurch gekennzeichnet, dass** die elektrische Komponente ein Sensor (1) ist.

3. Elektrische Komponente mit Steckkontakt nach Anspruch 1 oder 2, **dadurch gekennzeichnet, dass** Teil der thermischen Entkoppelung ein Bereich mit verringerter Drahtdicke ist.

4. Elektrische Komponente mit Steckkontakt nach einem der vorhergehenden Ansprüche, **dadurch gekennzeichnet, dass** Teil der thermischen Entkoppelung eine im Stecker vedaufende Schleife (8) ist.

5. Elektrische Komponente mit Steckkontakt nach einem der vorhergehenden Ansprüche, **dadurch gekennzeichnet, dass** Teil der thermischen Entkoppelung eine Metallfahne (9) ist.

6. Elektrische Komponente mit Steckkontakt nach einem der vorhergehenden Ansprüche, **dadurch gekennzeichnet, dass** der Draht (3) an seinem Ende als Steckerstift ausgebildet ist oder mit einem Steckerstift (4) fest verbunden ist.

7. Elektrische Komponente mit Steckkontakt nach einem der vorhergehenden Ansprüche, **dadurch gekennzeichnet, dass** das Gehäuse (5) ein Kunststoff-Gehäuse ist.

8. Elektrische Komponente mit Steckkontakt nach einem der vorhergehenden Ansprüche, **dadurch gekennzeichnet, dass** das Gehäuse (5) mittels Spritzgießens oder Gießens hergestellt ist, wobei es den Draht (3) zumindest im Bereich seiner thermischen Entkoppelung einbettet.

9. Elektrische Komponente mit Steckkontakt nach einem der vorhergehenden Ansprüche, **dadurch gekennzeichnet, dass** die elektrische Verbindung zwischen Meßstelle und Steckkontakt mit einem Material ausgebildet ist, das eine gute elektrische aber eine geringe thermische Leitfähigkeit aufweist.
